# EUROPEAN PATENT SPECIFICATION

(11) **EP 3 789 727 B1**
(45) Date of publication and mention of the grant of the patent: **10.04.2024**
(21) Application number: 19195284.5
(22) Date of filing: 04.09.2019
(51) Int. Cl.: G01B 9/0209, G01B 9/02055, G01B 9/02015

(54) **INTERFEROMETRIC MEASURING DEVICE**
INTERFEROMETRISCHE MESSVORRICHTUNG
DISPOSITIF DE MESURE INTERFÉROMÉTRIQUE

(43) Date of publication of application: 10.03.2021
(73) Proprietor: TAYLOR HOBSON LIMITED, Leicester LE4 9JQ (GB)
(72) Inventor: AM WEG, Christian, 64289 Darmstadt (DE); DRABAREK, Pawel, 75233 Tiefenbronn (DE); EISWIRT, Peter, 55129 Mainz (DE); MAY, Thilo, 64287 Darmstadt (DE)
(74) Representative: Weilnau, Carsten

(56) References cited:
- WO-A1-2018/172119
- DE-A1-102010 022 421
- US-A1- 2006 103 850
- US-A1- 2006 238 771
- CHIA-CHEN CHANG ET AL: "Multiplexed Optical Fiber Sensors Using a Single Fabry-Perot Resonator for Phase Modulation", JOURNAL OF LIGHTWAVE TECHNOLOGY, IEEE, USA, vol. 14, no. 7, 1 July 1996 (1996-07-01), XP011028590, ISSN: 0733-8724

## Description

### Field

The present disclosure relates to the field of interferometric measuring devices, in particular to fiber-implemented interferometric measuring devices for measuring a surface, a distance or profile of an object by reflection of electromagnetic radiation from the surface.

### Background

For measuring of a surface or surface profile of an object by way of reflection of electromagnetic radiation it is known to make use of an interferometric measuring device. Document DE10 2008 033 942 B3 discloses a fiber optically implemented optical multi-wavelength sensor for quantitatively measuring of a distance and/or of a topology of a surface by making use of two or more lasers having a wavelength between 1520 nm and 1630 nm and comprising a sensor head that is periodically spatially modulated in the direction of a measurement beam. Laser light used for such a sensor is highly coherent, both in the spatial and temporal domain. This allows to implement a highly precise measuring at a comparatively large working distance between the surface of an object and the sensor. Such devices also measure in reflection mode. Hence, at least a portion of the laser light emitted by the sensor and directed towards and onto the surface is reflected by the surface and is captured again by the sensor. Typically, the light emitted by the sensor is focused on the surface and the surface of the object is scanned in one or two dimensions by a respective relative movement between the sensor and the surface.

With a light beam focused onto a surface and reflected from the surface the surface should be located within the Rayleigh range or Rayleigh length of the focused beam. When the thickness of a transparent object is in the region or smaller than twice the Rayleigh range or Rayleigh length it is quite difficult to distinguish reflections emanating from a front surface and reflections emanating from a rear surface of the object. For measuring of a surface, a surface profile or a topology of optical components, such as lenses, it is rather important to distinguish light reflected from a front surface of the object from light that is reflected from a back surface of the object.

Further fiber-implemented interferometric devices are known from documents WO 2018/172119 A1, DE 10 2010 022421 A1, US 2006/103850 A1 and Chia-Chen Chang et al.: "Multiplexed Optical Fiber Sensors Using a Single Fabry-Perot Resonator for Phase Modulation", J. of Llightwave Technology, IEEE vol. 14, no. 7 (1996-07-01).

It is therefore an object of the present disclosure to provide an improved interferometric measuring device for measuring a surface, a profile or topology of an object, in particular of a transparent object, such as an optical component, e.g. of a lens, wherein the interferometric measuring device is particularly suitable for measuring of objects having comparatively small dimensions along a measuring axis or measuring direction. It is a particular aim to provide an improved interferometric measuring device that provides a well-defined and tunable or adjustable measuring depth or measuring length along a measuring direction. The working distance of the interferometric measuring device should be easily adaptable and tunable to varying measuring demands and measuring configurations. The interferometric measuring device should be rather robust in construction and operation. It should be easily reconfigurable and adaptable to different measuring scenarios and measuring conditions.

In one aspect there is provided an interferometric measuring device for measuring a surface, a profile or topology of an object, in particular of a transparent object, such as an optical component, e.g. of a lens. The measuring device comprises a light source. The light source is configured to emit a measuring beam. The measuring beam comprises a coherence length L. Typically, the light source is of low temporal coherence and of comparatively high spatial coherence. The light source typically comprises a broadband light source, such as a superluminescent diode. The light source may also comprise an amplified spontaneous emitter (ASE) configured to generate a measuring beam produced by spontaneous emission that is optically amplified by the process of stimulated emission in a gain medium. For instance, the light source may comprise one or several superluminescent diodes or doped fiber amplifiers.

The measuring device further comprises an optical probe comprising an internal reflector. The optical probe is coupled to the light source by a first fiber-based optical signal path. The measuring device further comprises a signal analyzer coupled to the optical probe by a second fiber-based optical signal path. The first and the second fiber-based optical signal paths may at least partially overlap. They may be implemented by one and the same optical or light transmitting component.

The measuring device further comprises an optical compensator arranged in one of the first fiber-based optical signal path and the second fiber-based optical signal path. Particularly, the optical compensator is either arranged in the first fiber-based optical signal path or in the second fiber-based optical signal path.

One of the optical probe and the optical compensator is configured to split the measuring beam into a first partial beam and a second partial beam and to impose an optical path difference D onto a portion of one of the first partial beam and the second partial beam relative to a portion of the other one of the first partial beam and the second partial beam. The optical path difference D imposed by the optical probe or the optical compensator is larger than the coherence length L. Typically, the optical path difference D is larger than the temporal coherence length L. The other one of the optical probe and the optical compensator is configured to compensate the optical path difference.

By splitting the measuring beam into a first and second partial beam and by imposing an optical path difference D onto respective portions of first and second partial beams the first and second partial beam can no longer interfere and as first and second partial beams are recombined no interference pattern will be apparent on the signal analyzer. It is only and due to the other one of the optical probe and the optical compensator and due to the compensation of the optical path difference that light reflected from the internal reflector of the optical probe and light reflected from the surface of the object interferes and forms an interference fringe pattern on a detector of the signal analyzer.

With some examples the internal reflector of the optical probe forms or constitutes a reference of the interferometric measuring device. Light reflected by the internal reflector of the optical probe and light reflected by the surface of the object and returning into the optical probe are subject to a runtime difference and hence to an optical path difference. When and as long the optical path difference between light reflected by the internal reflector and light reflected by the surface of the object is larger than the coherence length, these reflected light beams cannot interfere. For obtaining an interference pattern and for obtaining a relative phase information between the reflected partial beams, which phase information being indicative of the surface or surface profile of the object, it is provided that the optical path difference is compensated by the optical probe. With other examples, where the optical probe imposes the optical path difference between first and second partial beams it is the optical probe that serves as the optical compensator.

Hence, with some examples it is the internal reflector of the optical probe that splits the measuring beam into the first partial beam and the second partial beam. The first partial beam is reflected by the internal reflector and returns into the second fiber-based optical signal path. The second partial beam is emitted by the optical probe towards the surface of the object. There, the second partial beam is at least partially reflected and is captured by the optical probe and coupled into the second fiber-based optical signal path. Consequently, the first partial beam and a reflected portion of the second partial beam co-propagate into the second fiber-based optical signal path towards the signal analyzer.

As long as the optical path difference between the first partial beam and the reflected portion of the second partial beam is larger than the coherence length, these two beams cannot interfere. It is then due to the optical compensator at least partially or completely compensating the optical path difference in a well-defined and deterministic, e.g. constant way for a particular measurement, thus allowing and enabling the first partial beam and the reflected portion of the second partial beam to interfere.

With this example the optical compensator is arranged or integrated in the second fiber-based optical signal path. Here, the optical probe may be directly coupled to the light source. Light returning from the optical probe is coupled into the optical compensator. Thereafter it is coupled to the signal analyzer.

With other examples it is the optical compensator that splits the measuring beam provided by the light source into a first partial beam and a second partial beam. There is imposed an optical path difference D onto at least a portion of one of the first and second partial beams relative to a respective portion of the other one of the first and second partial beams. Here, it is the optical probe, in particular the optical path difference between the internal reflector of the optical probe and the surface of the object that leads to a compensation of the optical path difference previously imposed by the optical probe. With this example the optical compensator is arranged or integrated in the first fiber-based optical signal path and the second fiber-based optical signal path extends from the optical probe to the signal analyzer.

Typically and with further examples, the optical probe and the optical compensator mutually complement and correspond to each other. A degree of compensation of the optical path difference provided by the optical compensator typically matches the optical path difference between the internal reflector of the optical probe and the surface of the object. Typically, the surface of the object is quantitatively known and the degree of compensation provided by the optical compensator matches the optical path difference between the internal reflector and the surface of the object. Variations of an interference pattern detectable by the signal analyzer as the optical probe scans along the surface provides measurement data being indicative of the surface properties, in particular of the surface profile or topology of the surface on a microscopic scale.

The same is valid when the optical compensator is configured to split the measuring beam into a first partial beam and a second partial beam and wherein the optical probe compensates the optical path difference of at least of portions of first and second partial beams.

The two possible and alternative arrangements of the optical compensator in one of the first fiber-based optical signal path and the second fiber-based optical signal path allows for a rather flexible configuration of the interferometric measuring device. The interferometric measuring device may be easily reconfigured and adapted to different measurement demands and measuring conditions. Moreover, providing of first and second fiber-based optical signal paths is of great practical use. The light source, the optical probe, the signal analyzer and the optical compensator may be all provided with fiber optical ports or connectors thus enabling a rather robust and highly reliable interferometric measuring device, which is easily reconfigurable to varying measuring demands and measuring conditions.

With examples, wherein the optical compensator is located or integrated in the first fiber-based optical signal path, the total intensity provided at the optical probe is smaller compared to examples, wherein the optical compensator is located or integrated in the second fiber-based optical signal path. With some examples and with the optical compensator in the first fiber-based optical signal path, only a portion of the initial light intensity as provided by the light source will be transferred to the optical probe. In this way, the optical probe may easily fulfill regulatory demands in terms of a laser protection class or light protection class.

With other examples, and when the optical compensator is located in the second fiber-based optical signal path, the light intensity available at the optical probe can be increased. This may be of particular benefit in such cases, wherein an optical reflectivity of the object is rather low and/or when the total power of the light sources is comparatively small.

According to a further example the light source comprises an amplified stimulated emitter and/or a superluminescent diode. Typically, the light source features a rather large spatial coherence and a rather short temporal coherence. The coherence length, in particular the temporal coherence length is comparatively short. It is typically smaller than 5 cm, smaller than 1 cm or even smaller than 1 mm.

Moreover, the coherence length L, in particular the temporal coherence length of the light source is smaller than a Rayleigh range of a focusing lens of the optical probe by way of which the measuring beam and/or one of the first or second partial beams is emitted onto the surface of the object. In this way, the interferometric measuring device can be easily tuned and adapted to precisely measure only one of a plurality of surfaces that lie within or cross the Rayleigh range of the optical probe.

According to a further example the first fiber-based optical signal path comprises a first optical fiber and a second optical fiber. The first optical fiber connects the light source to a first optical circulator. The second optical fiber connects the first optical circulator to the optical probe. In this way the entire optical path starting from the light source and terminating at the optical probe is fiber-based or fiber-implemented. There is no free beam propagation between the light source and the optical probe. This provides a rather robust and highly reliable implementation of the measuring device. In addition, the first optical fiber may be detachably connected to the first optical circulator. Likewise, the second optical fiber may be detachably connected to at least one of the first optical circulator and the optical probe. In this way the measuring device can be easily reconfigured to adapt and to conform with varying measuring demands or configurations.

With a further example the second fiber-based optical signal path comprises the second optical fiber and a third optical fiber. The third optical fiber connects the signal analyzer to the optical circulator. Insofar, the third optical fiber and the second optical fiber provide transmission of light from the optical probe via the first optical circulator towards the signal analyzer. The second fiber-based optical signal path is hence configured to direct or to transmit radiation reflected by the surface of the object towards the signal analyzer.

Here, the second optical fiber may be implemented as a bi-directional optical fiber. The second optical fiber provides transmission of light from the first optical circulator to the optical probe. At the same time the second optical fiber provides transmission of light reflected by the object and captured by the optical probe towards the signal analyzer.

Typically, the first optical circulator is a three-port circulator. A first port of the first optical circulator is connected to the first optical fiber, a second port of the first optical circulator is connected to the second optical fiber and a third port of the first optical circulator is connected to the third optical fiber. Light entering the first port is transmitted to the second port and is hence transmitted via the second optical fiber towards the optical probe. Light reflected by the object and/or reflected by the internal reflector of the probe returns to the first optical circulator. There, it does not return into the first optical fiber but it is directed via the third port of the first optical circulator towards and into the third optical fiber.

The implementation of a first optical circulator provides optical beam and hence signal transmission from the light source towards the optical probe and in a return direction, hence from the optical probe towards the signal analyzer. Here, it is of particular benefit, that the optical probe and the first optical circulator can be connected by only one, namely by the second optical fiber. This helps to reduce the number of components to implement the interferometric measuring device.

Generally, also a fiber coupler could be implemented instead of an optical circulator.

With some examples of the interferometric measuring device, in particular when the optical compensator is arranged or integrated in the first fiber-based optical signal path the first optical fiber terminates in an input port of the optical compensator. An output port of the optical compensator is connected in a fiber-based way to the first port of the optical circulator. The fiber-based connection between the optical compensator and the first optical circulator may be implemented and provided by a fourth optical fiber. The optical compensator may be detachably connectable to the first optical fiber and/or to the fourth optical fiber. In this way the optical compensator is removably arranged or integrated in the first fiber-based optical signal path.

With other examples and when the optical compensator is arranged or integrated in the second fiber-based optical signal path the third port of the first optical circulator is connected to an input port of the optical compensator by the fourth optical fiber. An output port of the optical compensator is connected to the signal analyzer by the third optical fiber. Also here, fourth and third optical fibers may be detachably connected to the optical compensator.

The input port and the output port of the optical compensator may comprise a fiber coupling. The first port, the second port and the third port of the first optical circulator may comprise corresponding fiber couplers. Also the optical probe and the light source may be provided with respective optical couplers allowing for a detachable connection of optical fibers.

With typical examples the signal analyzer comprises a demultiplexer and at least one detector, e.g. a photodiode or a spatial light detector. Moreover, the signal analyzer comprises at least a processor connected to the at least one light detector. The processor provides digital signal processing of signals generated by the at least one light detector. Typically, the signal analyzer comprises numerous light detectors, each of which separately connected to the demultiplexer. The at least one or several light detectors may be each provided with or coupled to a separate optical, i.e. spectral filter. Typically, the at least one or more optical or spectral filters are provided by the demultiplexer. The demultiplexer may comprises the at least one or several spectral filters, wherein an output of each filter is connected to one of the light detectors.

This arrangement provides a wavelength selective detection of signals by one or several detectors. A first detector may be coupled to a first spectral filter of the demultiplexer to detect interference signals on the basis of a first spectral range or at a first wavelength. A second detector may be coupled to a second optical and/or spectral filter of the demultiplexer to detect an interference pattern on the basis of a second spectral range or at a second wavelength different to the first spectral range or different to the first wavelength. A multi-wavelength or multi-spectral range analysis increases the spatial measurement range of the interferometric measuring device. The interferometric measuring device, in particular the broadband light source generally provides an interference for a large variety of different wavelength or spectral ranges. With the demultiplexer or spectral filter of the signal analyzer multiple interference patterns at discrete and different wavelengths can be analyzed simultaneously.

The demultiplexer may be configured to operate on one of a coarse wavelength division multiplexing (CWDM) scheme and a dense wavelength division multiplexing (DWDM) scheme.

Moreover, by appropriately selecting the spectral width of the at least one filter of the demultiplexer the effective coherence length can be appropriately varied. By decreasing the spectral width of the at least one spectral filter of the demultiplexer, the coherence length can be effectively increased. By increasing the spectral width of the at least one spectral filter of the demultiplexer the coherence length can be effectively reduced. Typically, with spectral filters featuring a spectral width (FWHM) of less than 1 nm a coherence length of more than 2 mm, typically between 2 mm and 3 mm can be obtained. Moreover, with spectral filters featuring a spectral with of more than 15 nm, e.g. of about 10 nm - 20 nm a coherence length of less than 200 µm, less than 150 µm or even less than 120 µm can be obtained.

With typical examples, the light source comprises a broadband light source featuring a spectral width of more than 50 nm (full with half maximum (FWHM)), more than 70 nm, more than 90 nm or even more than 100 nm. The spectrum of the light source may exhibit at least two or even more rather broad peaks. With some examples the spectrum of the light source comprises three peaks, each of which having a spectral with (FHWM) of more than 10 nm, more than 15 nm, more than 20 nm and/or or less than 30 nm, less than 25 mm or less than 20 nm.

The spectral filters combined with the numerous optical detectors may comprise a spectral with (FHWM) of less than 20 nm, less than 15 nm or less than 10 nm. Some spectral filters comprise a spectral width between 10 nm and 15 nm. They may exhibit a spectral width of about 13 nm. Depending on the wavelength of the broadband light source and/or or depending on the spectral width of the at least one filter between the demultiplexer and the at least one detector, a coherence length L of less than 200 µm, less than 180 µm, less than 150 µm, less than 120 µm or less than 100 µm can be obtained. With some examples, the coherence length is between 160 µm and 200 µm, between 175 µm and 200 µm, or between 180 µm and 200 µm.

According to the invention, the optical compensator comprises a compensator head and first reflector. The compensator head is configured to direct one of the measuring beam, the first partial beam, the second partial beam or a portion thereof towards the first reflector. Typically, the compensator head is also configured to capture light reflected by the first reflector in response to the transmission or direction of one of the first partial beam, the second partial beam or a portion thereof towards the first reflector. Typically, there is implemented a free beam propagation between the compensator head and the first reflector. The compensator head and the first reflector may be encapsulated in a housing. This allows to reduce external disturbances or perturbations to a minimum.

By means of the compensator head and the first reflector an optical path difference can be either imposed on first and second partial beams generated by the compensator head and the first reflector. Typically, the optical path difference between the compensator head and the first reflector coincides, matches with or is adjustable to an optical path difference between the surface of the object and the internal reflector of the optical probe. The optical path difference between the compensator head and the first reflector does not have to be identical to the optical path difference of the internal reflector and the surface of the object. The respective deviation between the optical path difference provided by the optical compensator and the optical path difference provided by the optical probe must be smaller than the coherence length of the light source. In this way an optical path difference between first and second partial beams or portions thereof can be effectively compensated and respective light beams provided to the signal analyzer may interfere.

According to a further example the compensator head is optically coupled to one of the first fiber-based optical path and the second fiber-based optical path through an internal optical fiber. In this way the compensator head is arranged in or integrated into one of the first fiber-based optical signal path and the second fiber-based optical signal path. In this way, a rather robust and reliable optical coupling of the compensator head with one of the light source, the optical probe and the signal analyzer can be provided.

Via the internal optical fiber the compensator head is optically coupled to at least one or both of an input port and an output port of the optical compensator. The fiber-based connection of the compensator head to at least one or to both, the input port and the output port of the optical compensator allows for a moveable arrangement of the compensator head inside a housing of the optical compensator.

With some further examples the compensator head may be detachably connectable to at least one of the input port and the output port via the internal optical fiber. Here, the internal optical fiber may be detachably connectable to the compensator head. In this way numerous and differently configured compensator heads can be used with the optical compensator, e.g. to modify the imposing of an optical path difference or to modify a compensation of the optical path difference between the first partial beam, the second partial beam and/or portions thereof.

According to the invention, the compensator head comprises a second reflector.

The second reflector is configured to split the measuring beam into the first partial beam and the second partial beam. Here, both, the first partial beam and the second partial beam are transmitted towards the optical probe. With this example the optical compensator is arranged or integrated in the first fiber-based optical signal path. The second reflector is a partial reflector. It may be implemented as a beam splitter. The first partial beam may be reflected at the second reflector and may thus return into the internal optical fiber. The second partial beam is transmitted by the second reflector and is directed towards the first reflector. There, the second partial beam is reflected and returns to the compensator head. The reflected second partial beam re-enters the compensator head and the internal optical fiber. In this way and by the optical path difference between the first and second reflectors of the compensator an optical path difference can be imposed between the first and second partial beam or portions thereof. Typically, the optical path difference imposed by the optical compensator matches in size with the optical path difference imposed on the respective beam or beam portions by the optical probe.

With another example the compensator head comprises the second reflector. Here the second reflector is configured to split the first partial beam into first and second sub-beams of the first partial beam and to split the second partial beam into first and second sub-beams of the second partial beam. This configuration of the compensator head particularly applies when the optical compensator is arranged or integrated in the second fiber-based optical signal path. Here, the first partial beam and the second partial beam are already provided with the optical path difference D. Typically, the first sub-beams of the first and second partial beams are transmitted by the second reflector. They are reflected by the first reflector. The reflected first sub-beams may then re-enter the second fiber-based optical path. The second sub-beams of the first and second partial beams are reflected by the second reflector. The reflected second sub-beams may remain in the second fiber-based optical path.

First and second partial beams have been generated and/or the optical path difference has been imposed by the optical probe. First and second partial beams are typically split from the measuring beam by the internal reflector of the optical probe. Splitting of the measuring beam into first and second partial beams provided by the internal reflector of the optical probe may be somewhat equivalent or substantially identical to the above described splitting of the measuring beam into first and second partial beams as provided by the second reflector of the compensator head. It may be provided by a fiber end face.

With the optical probe, in particular by the internal reflector of the optical probe, the measuring beam may be split into a first partial beam and a second partial beam. The first partial beam returns into the optical probe and/or into the optical fiber typically connecting the optical probe with the first optical circulator. The second partial beam is transmitted by the internal reflector and is directed, e.g. focused on the surface of the object. There, the second partial beam or at least a portion thereof is reflected and returns into the optical probe and into the respective fiber. In this way, an optical path difference is imposed between the first and second partial beams or portions thereof.

With the present example and when the optical probe provides a splitting of the measuring beam into first and second partial beams and wherein the optical compensator is arranged in the second fiber-based optical signal path the first partial beam is split into first and second sub-beams and the second partial beam is likewise split into first and second sub-beams by the optical compensator. Here, a first sub-beam of the first partial beam is transmitted through the second reflector and is directed towards the first reflector. There, the first sub-beam of the first partial beam is reflected and returns into the compensator head. The second sub-beam of the first partial beam is reflected by the second reflector and returns directly into the compensator head and/or into the internal optical fiber. Both, the first and second sub-beams of the first partial beam co-propagate in the internal optical fiber towards an output port of the optical compensator. Due to the optical path difference between the first and the second reflectors first and second sub-beams of the first partial beam comprise a respective optical path difference.

The same is valid for the second partial beam. Here, a first sub-beam of the second partial beam is transmitted through the second reflector and is hence directed towards the first reflector. There, the first sub-beam of the second partial beam or at least a portion thereof is reflected towards the compensator head. The reflected sub-beam or at least a portion thereof is captured by the compensator head and is coupled into the internal optical fiber. The second sub-beam of the second partial beam is directly reflected by the second reflector and is coupled into the internal optical fiber. In this way also first and second sub-beams of the second partial beam co-propagate in the internal optical fiber towards an output port of the optical compensator. Since there is imposed an optical path difference between the reflected co-propagating first and second sub-beam of the second partial beam these sub-beams cannot interfere.

Rather, an optical path difference C is imposed on the first sub-beam of the second partial beam compared to the second sub-beam of the first partial beam in such a way that the first sub-beam of the second partial beam is delayed compared to second sub-beam of the first partial beam. This optical path difference is equal to or at least similar in magnitude to the optical path difference imposed between first and second partial beam by the optical probe. The delay imposed by the probe onto the second partial beam relative to the first partial beam is effectively compensated by a delay imposed by the optical compensator onto the first sub-beam of the first partial beam relative to the second sub-beam of the first partial beam.

In further examples, wherein the optical compensator is arranged in the first fiber-based optical signal path and wherein the optical compensator splits the measuring beam into first and second partial beams, it is the internal reflector of the optical probe that is configured to split the first partial beam into first and second sub-beams of the first partial beam and to split the second partial beam into first and second sub-beams of the second partial beam. Here, the roles and functions of the second reflector and the internal reflector of the optical probe interchange.

With some examples, wherein the optical compensator is arranged in the first fiber-based optical signal path and wherein the measuring beam as provided by the light source is split into first and second partial beams by the optical compensator, the first partial beam is delayed compared to the second partial beam by the optical path difference D. Now and with the optical probe the first sub-beam of the second partial beam is transmitted by the internal reflector and the second sub-beam of the first partial beam is reflected by the internal reflector.

This imposes a compensating optical path difference between the second sub-beam of the first partial beam compared to the first sub-beam of the second partial beam. This optical path difference typically matches the optical path difference imposed by the optical probe and as governed by the optical path difference between the internal reflector and the surface of the object.

In this way the optical path difference between first and second partial beams and as imposed by the optical probe is effectively compensated with the second sub-beam of the first partial beam and the first sub-beam of the second partial beam. These sub-beams and the optical path differences imposed on these sub-beams mutually compensate.

Generally, it is sufficient, when the compensation of the optical path difference reduces the total optical path difference of the second sub-beam of the first partial beam and the first sub-beam of the second partial beam to an optical path difference that is smaller than the coherence length of the light source. In this way the second sub-beam of the first partial beam and the first sub-beam of the second partial beam may interfere and provide an interference pattern on the signal analyzer.

With other examples, wherein the optical compensator is arranged in the first fiber-based optical signal path it is the second reflector that splits the measuring beam into the first partial beam and the second partial beam. Then the first partial beam is split into first and second sub-beams of the first partial beam by the internal reflector of the optical probe. The internal reflector of the optical probe further provides splitting of the second partial beam into first and second sub-beams of the second partial beam. Here, the second partial beam precedes the first partial beam as they enter the optical probe. Hence, the first partial beam is provided with a delay compared to the first partial beam due to an increased optical path difference between the first and second reflectors of the optical compensator.

Now and when the first and second partial beams enter the optical probe it is the first sub-beam of the first partial beam that propagates through the internal reflector while the second sub-beam of the first partial beam is reflected by the internal reflector of the optical probe. The reflected second sub-beam of the first partial beam returns into the respective optical fiber. Moreover, the first sub-beam of the second partial beam propagates through the internal reflector and is directed towards the surface of the object. There, at least a portion of the first sub-beam of the second partial beam is reflected and re-enters the optical probe and the respective fiber. Also here, the first sub-beam of the second partial beam is configured to interfere with the second sub-beam of the first partial beam.

According to the invention, an optical path difference between the first reflector and the second reflector is modifiable and/or adjustable. By adjusting or modifying the optical path difference between the first and second reflectors the working distance of the optical probe can be modified and/or adjusted accordingly. In this way rather thin optical components, such as comparatively thin lenses can be analyzed and measured with the interferometric measuring device. Typically, the coherence length, e.g. the temporal coherence length of the light source is smaller than a thickness of the reflective object. With a given distance between the optical probe and the surface of the object there is defined a respective optical path difference between the surface of the object and the internal reflector.

With the optical compensator, a respective optical path difference can be set or adjusted between the first and second reflectors. In this way the optical path difference between the internal reflector of the optical probe and the surface of the object can be compensated on a macroscopic scale. Further optical path differences on a microscopic scale that emanate from the topology, the surface or the profile of the object and being shorter than the coherence length of the light source can be measured by the interferometric measuring device. Surface or profile deviations of the surface of the object lead to variations in the interference pattern obtainable at the signal analyzer as the optical probe scans the surface of the object, e.g. point-by-point.

According to the invention, one of the compensator head and the first reflector is moveable relative to the other one of the compensator head and the first reflector along a track. The track may comprise an elongated track. The track may extend along the propagation direction of one of the measuring beam, the first partial beam and the second partial beam as the respective beams propagate from the compensator head towards the first reflector and/or from the first reflector back into the compensator head.

By moving the first reflector along a track, e.g. along an elongated or straight-shaped track the optical path difference between the first reflector and the second reflector of the optical compensator is easily modifiable and/or adjustable. Typically, at least one of the first reflector and the compensator head is mounted on a translation stage or on some other moveable device allowing and supporting varying of the optical path difference between first and second reflectors of the optical compensator. There may be provided an electromechanical drive, by way of which the compensator head is moveable relative to the first reflector along the track. The track may comprise a guide rail along which at least one of the compensator head and the first reflector is moveable relative to the other one of the compensator head and the first reflector.

According to the invention, the optical compensator comprises at least one piezoelectric transducer and wherein one of the compensator head and the first reflector is movable relative to the other one of the compensator head and the first reflector by the piezoelectric transducer. The piezoelectric transducer imposes a movement of the compensator head relative to the first reflector along the propagation direction of the first partial beam and the second partial beam.

The piezoelectric transducer may comprise a series or a stack of numerous piezoelectric layers each of which providing a shift of the optical path between first and second reflectors of the optical compensator. The piezoelectric transducer may be sufficient to modify the optical path difference between the first and second reflectors. With some examples the piezoelectric transducer is provided in addition to a moveable arrangement of the first reflector relative to the second reflector, hence in addition to a moveable arrangement of the compensator head relative to the first reflector.

With some examples the compensator head is arranged on a translation stage whereas the first reflector is fixed inside the housing of the optical compensator. Here, the piezoelectric transducer may be arranged between the translation stage and the compensator head or it may be arranged between the housing and the first reflector. Likewise, it is also conceivable that the compensator head is substantially fixed inside the housing of the optical compensator and that the first reflector is mounted on a translation stage for moving the first reflector relative to the second reflector.

According to the invention, the piezoelectric transducer is periodically driven at a driving frequency between 100 Hz and 100 kHz. Periodically driving the transducer provides a phase shift on the respective partial beam or sub-beam of a partial beam. In this way, the signal processing, in particular the determination of the relative phase between the interfering sub-beams of first and second partial beams on the signal analyzer can be improved. As the piezoelectric transducer is periodically driven the phase of the interference pattern on a respective detector of the signal analyzer is subject to a corresponding movement.

This movement is detectable and analyzable by the signal processing connected to the respective detector. The variation of the measurable intensity of an interference pattern or interference fringe on the detector dependent over the phase shift of the interfering sub-beams is quantitatively and rather precisely known. Modifying the phase between the interfering sub-beams through the periodic driving of the piezoelectric transducer thus enables to precisely determine the relative phase between the interfering sub-beams. Relative phases being as small as 1/1000 of the wavelength can be precisely determined in this way. The precision of the measuring device can be thus improved.

According to a further example the second reflector coincides with or is formed by an end face of the internal optical fiber. In this way a rather compact and robust design of the second reflector can be provided. The compensator head may further comprise an optical element, such as a focusing lens by way of which light emitted by the fiber end face is focused on the first reflector. With the same optical component, e.g. with the same lens, light reflected by the first reflector can be coupled back into the internal optical fiber through its respective end face.

Similarly, also the internal reflector of the optical probe may coincide with or may be formed by an end face of the second optical fiber terminating in or at the optical probe. This allows and supports a rather compact design of the optical probe. This is of particular benefit when the optical probe should be used for the measuring of comparatively small hollow objects. In this way, the optical probe can be for instance used to measure an inside surface of a hollow structure, such as an inside surface of a cylindrical object.

According to a further example the optical compensator comprises a second optical circulator. The second optical circulator comprises a first port, a second port and a third port. The second port is optically coupled to the compensator head. Insofar, light entering the optical compensator via the first port is directed to the second port and hence to the compensator head. Insofar, light entering the first port is directed to the compensator head. Light returning from the compensator head, e.g. light reflected by the first and/or second reflectors of the optical compensator is directed to the third port. Here, the first port is an input port and the third port is an output port.

According to a further example the first port of the second optical circulator is connected to the light source and the third port is connected to the first optical circulator. Alternatively, the first port of the second optical circulator is connected to the first optical circulator and the third port of the second optical circulator is connected to the signal analyzer.

With examples, wherein the optical compensator is arranged or integrated in the first fiber-based optical signal path the first port of the second optical circulator is connected to the light source and the third port of the optical compensator is connected to a third port of the first optical circulator. With other examples, wherein the optical compensator is arranged or integrated in the second fiber-based optical signal path the first port of the second optical circulator is connected to a third port of the first optical circulator. The third port of the second optical circulator is connected to an input port of the signal analyzer.

According to another example the optical probe comprises a beam splitter configured to emit a first measuring beam and a second measuring beam. Particularly, the beam splitter is configured to emit the first measuring beam in a first direction or to a first object. The beam splitter is further configured to emit the second measuring beam in a second direction and/or to a second object. By means of the beam splitter the optical probe is enabled to measure the distance to a surface of the object along two different directions or to measure a first distance to a first object and to measure a second distance to a second object.

Typically, a first working distance along the first direction may differ from a second working distance along the second direction. The distance difference along first and second measuring directions is typically larger than the coherence length of the light source. In this way the measuring device may easily switch between a measurement along the first direction or to the first object and measuring of a distance along the second direction and/or to the second object by adjusting the optical path difference imposed or compensated by the optical compensator.

When a distance along the first direction or to the first object should be measured, the optical compensator is configured in accordance to the optical path difference between the internal reflector of the optical probe and the surface of the first object or the surface detectable along the first measuring direction. In other configurations and when the second measuring beam should be activated the optical compensator is used to compensate the optical path difference between the internal reflector of the optical probe and the surface of the second object or the surface of an object measured along the second direction.

By modifying the optical path difference between first and second reflectors of the optical compensator, the working distance of the optical probe along first and second directions can be adjusted and modified. Only such beams will be subject to a measurable interference on the signal analyzer that are reflected along or counter the first and second directions and which are reflected by first or second objects and having an optical path difference that matches with the optical path difference imposed or compensated by the optical compensator.

According to another example the measuring device further comprises a second optical probe comprising an internal reflector and coupled to the light source by a third fiber-based optical signal path. The measuring device further comprises a second signal analyzer coupled to the second optical probe by a fourth fiber-based optical signal path. There is further provided a second optical compensator arranged in one of the third fiber-based optical signal paths and the fourth fiber-based optical signal path.

In this way the first optical probe and the first optical compensator may be mutually adjusted to provide measuring of the surface or profile of the object at a first working distance from the first optical probe. Concurrently and simultaneously the second optical probe and the second optical compensator may be mutually adjusted to measure a surface or profile of the object at a second working distance that differs from the first working distance. Likewise, and depending on the orientation of first and second optical probes the surface, the profile or topology of different objects or measuring of respective first and second distances along different first and second directions can be measured simultaneously. The first and second signal analyzer may share a signal processor. With some examples first and second signal analyzer are each provided with a separate signal processor.

As described above in connection with the optical probe and the optical compensator, also one of the second optical probe and the second optical compensator is configured to split the measuring beam into a first partial beam and a second partial beam and to impose an optical path difference onto a portion of one of the first and second partial beams relative to a portion of the other one of the first and second partial beams. Also here, the optical path difference is larger than the coherence length. The other one of the second optical probe and the second optical compensator is configured to compensate the optical path difference. In principle, the second optical probe is implemented similarly or identically to the optical probe as described above. The same is valid for the second optical compensator compared to the optical compensator as described above and to the second signal analyzer compared to the signal analyzer as described above.

According to a further example first and second optical compensators may be coupled in that they share at least one optical component. With some examples at least one reflector is shared by the first optical compensator and the second optical compensator. The first optical compensator comprises a first compensator head directed towards a common reflector representing the first reflector. Likewise, the second optical compensator comprises a second compensator head directed to the same, hence to the common reflector or first reflector.

Here it may be of particular benefit, when the common or shared reflector is fixed to a support or to a housing of first and second optical compensators. The first compensator head and the second compensator head may be independently moveable in the housing relative to the common or shared reflector. In this way the first and the second optical compensators are configured to provide compensation or imposing of different optical path differences between first and second partial beams or portions thereof.

With a further example the at least one reflector shared by the first and second optical compensators is supported by the piezoelectric transducer. In this way and for the implementation of first and second optical compensators in a common housing there is required only one first reflector and only one piezoelectric transducer. In this way and by arranging first and second compensator heads in a common housing and/or by directing first and second compensator heads of first and second optical compensators to a common reflector a number of components of such a combined first and second optical compensator can be reduced compared to embodiments or examples, wherein each optical compensator comprises a compensator head and an own first reflector and/or an own piezoelectric transducer.

The measuring device as described above is by no way limited to the implementation of first and second optical probes, signal analyzers and optical compensators. Due to the fiber optic implementation the measuring device is expandable to numerous optical probes, signal analyzers and optical compensators thus allowing to realize numerous different working distances, e.g. along different directions simultaneously.

### Brief description of the drawings

In the following, some examples of the interferometric measuring device are described in greater detail by making reference to the drawings, in which:
- Fig. 1: is indicative of one example of the interferometric measuring device,
- Fig. 2: is indicative of a further example of the interferometric measuring device,
- Fig. 3: shows a schematic illustration of the internal structure of the optical compensator,
- Fig. 4: is illustrative of first and second partial beams and respective sub-beams propagating between the compensator head and the first reflector of the optical compensator,
- Fig. 5: shows the implementation of the piezoelectric transducer in the optical compensator,
- Fig. 6: is illustrative of an example of the interferometric measuring device, wherein the optical probe is configured to measure a distance to a reflective surface along a first and a second direction,
- Fig. 7a: shows one example of an optical probe in accordance to Fig. 6,
- Fig. 7b: shows a further example of an optical probe,
- Fig. 8: is illustrative of a measuring device comprising first and second optical probes, first and second signal analyzers and first and second optical compensators, and
- Fig. 9: schematically illustrates focusing of a measuring beam on a reflective surface of a comparatively thin transparent object.

### Detailed Description

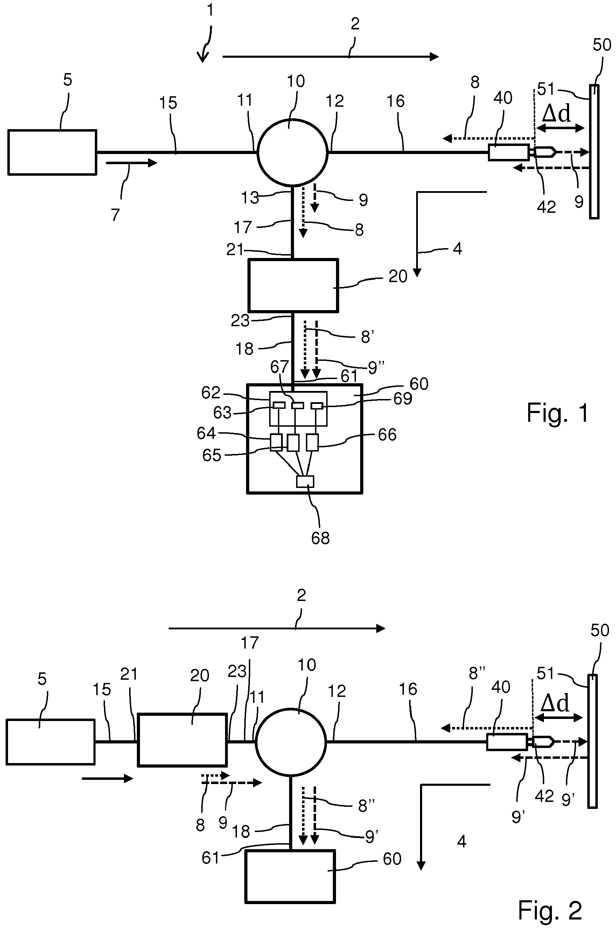

The interferometric measuring device 1 as illustrated in Fig. 1 comprises a light source 5 that is configured to emit a measuring beam 7. The measuring beam 7 comprises a comparatively short temporal coherence length L. The measuring device 1 further comprises an optical probe 40 featuring an internal reflector 42 and being coupled to the light source 5 by a first fiber-based optical signal path 2. The measuring device 1 further comprises a signal analyzer 60 coupled to the optical probe 40 by a second fiber-based optical signal path 4. The measuring device 1 further comprises an optical compensator 20 which is arranged in the second fiber-based optical signal path 4. With the example of Fig. 2 the optical compensator 20 is arranged in the first fiber-based optical signal path 2.

The interferometric measuring device 1 is configured to measure a distance between the optical probe 40 and a surface 51 of an object 50 by interferometry. The optical probe 40 is configured to generate a reference beam. Light transmitted to the optical probe 40 via the first fiber-based optical signal path 2 is split into a first partial beam 8 and a second partial beam 9 as illustrated in Fig. 1. The second partial beam 9 is directed towards the surface 51 of the object 50, whereas the first partial beam 8 is internally reflected by the internal reflector 42 of the optical probe 40. Here the first partial beam 8 serves as a reference beam and the second partial beam 9 is a signal beam which is reflected on the surface 51 of the object 50.

The internal reflector 42 of the optical probe 40 may be implemented as an end face of a second optical fiber 16 connecting the optical probe 40 to the light source 5 and connecting the optical probe 40 to the signal analyzer 60. The second partial beam 9 is at least partially reflected on the surface 51 of the object 50 and re-enters the optical probe 40. Due to the optical path difference between the internal reflector 42 and the reflective surface 51 of the object 50 there is imposed an optical path difference D between the first and second partial beams 8, 9. Typically, this path difference D is larger than the coherence length L of the light source 5.

As the first partial beam 8 and a reflected portion 9' of the second partial beam 9 co-propagate along the second optical fiber 16 from the optical probe 40 towards the signal analyzer 60 these beams are originally not able to interfere because the optical path difference D is larger than the coherence length L. With the optical compensator 20 arranged in the second fiber-based optical signal path 4 this macroscopic optical path difference can be at least partially compensated so that the optical path difference is entirely compensated or partially compensated at least to a degree that is smaller than the coherence length L. In this way the optical compensator 20 compensates the optical path difference and provides correspondingly compensated first and second partial beams 8', 9" or portions thereof to the signal analyzer 60.

As illustrated in Fig. 1 the optical path of the first partial beam 8 differs from the optical path of the second partial beam 9 by the optical path difference D = 2Δd, with Δd being the distance between the internal reflector 42 and the reflective surface 51 of the object 50.

In the other setup as illustrated in Fig. 2 it is the optical compensator 20 that splits the measuring beam 7 as provided by the light source 5 into a first and second partial beam 8, 9.

In Fig. 2, the first and second partial beams 8, 9 propagate along the first fiber-based optical signal path 2 towards and into the optical probe 40. There, both, first and second partial beams 8, 9 are further split into first and second sub-beams. The first sub-beam 8', 9' of the first and second partial beams 8, 9 is transmitted through the internal reflector and the second sub-beam 8", 9" of first and second partial beams 8, 9 is reflected by the internal reflector 42. The optical path difference D between the internal reflector 42 and the surface 51 of the object matches the optical path difference of the first and second partial beams 8, 9 as provided by the optical compensator 20.

As illustrated in Fig. 2, the optical compensator 20 serves to impose a delay on the first partial beam 8 compared to the second partial beam 9. Hence, the optical path of the first partial beam 8 is longer by the optical path difference D compared to the optical path of the second partial beam 9. The second partial beam 9 precedes the first partial beam 8. The further optical path difference imposed by the optical probe 40 onto first and second partial beams 8, 9 is substantially of the same magnitude but compensates the optical path difference D at least between a selected pair of first and second sub-beams 9', 8" of first and second partial beams 8, 9.

When for instance the optical compensator 20 induces a delay onto the first partial beam 8 compared to the second partial beam 9 such that the optical path of the first partial beam 8 is larger than the optical path of the second partial beam 9, the second sub-beam 8" of the first partial beam 8 as reflected by the internal reflector 42 of the optical probe 40 will be able to interfere with a first sub-beam 9' of the second partial beam 9 which is transmitted through the internal reflector 42 and which is reflected by the surface 51 of the object 50.

On a macroscopic scale the optical path of the second sub-beam 8" of the first partial beam 8 and the optical path of the first sub-beam 9' of the second partial beam 9 is somewhat identical when the second sub-beam 8" and the first sub-beam 9' co-propagate along the second fiber-based optical signal path 4 towards the signal analyzer 60.

With either implementation of the optical compensator 20 and the optical probe 40 as illustrated in Figs. 1 and 2, an optical path difference D larger than the coherence length L and induced by one of the optical probe 40 and the optical compensator 20 is effectively compensated by the other one of the optical probe 40 and the optical compensator 20. In this way, at least a portion 8', 8", 9', 9" of first and second partial beams 8, 9 co-propagating towards the signal analyzer 60 will be able to interfere and to reveal relative phase shifts between the interfering partial beams 8", 9' emanating from variations of the surface or topology of the surface 51 as the optical probe 40 scans the surface 51 of the object 50 point-by-point or step-by-step.

The light source 5 typically comprises a superluminescent diode providing a broadband spectral range of the measuring beam 7. The measuring beam 7 typically comprises a comparatively short temporal coherence length L. The coherence length L is typically shorter than the optical path difference imposed by one of the optical probe 40 and the optical compensator 20 between first and second partial beams 8, 9. Typically and as illustrated in Fig. 1, the signal analyzer 60 comprises a demultiplexer 62 allowing to separate and/or to split the light entering via an input port 61 of the signal analyzer 60 into numerous spectral parts. Each of the selected or demultiplexed spectral parts is obtained through a respective spectral filter 63, 67, 69. The spectral filters 63, 67, 69 are separately and individually coupled to detectors 64, 65, 66. Each detector 64, 65, 66 may be provided with or connected to a separate spectral filter 63, 67, 69. The spectral filters 63, 67, 69 are optimized and designed for different wavelengths or different spectral ranges. They may have a spectral filter width (FWHM) of less than 20 nm, less than 15 nm or less than 10 nm. Some spectral filters may comprise a spectral width between 10 nm and 15 nm. They may exhibit a spectral width of about 13 nm. With other examples and for increasing the effective coherence length the spectral filters may comprise a spectral width of less than 5 mm, less than 2 nm or even less than 1 nm.

Generally, there may be provided a large number of detectors by way of which interference patterns in different spectral ranges can be analyzed simultaneously. Typically, the numerous light detectors 64, 65, 66 are coupled with a signal processor 68 that provides a processing of the signals obtained from the numerous detectors 64, 65, 66.

With both examples of Fig. 1 and Fig. 2 there is provided a first optical circulator 10 by way of which first and second fiber-based optical signal paths 2, 4 can be divided. By means of the first optical circulator 10 light emanating from the light source 5 can be directed to the optical probe 40. Light returning from the optical probe 40 can be directed to the signal analyzer 60.

As illustrated in Fig. 1 there is provided a first optical fiber 15 connecting the light source 5 with the first optical circulator 10. In particular, the first optical fiber 15 is connected to a first port 11, e.g. implemented as an input port of the first optical circulator 10. A second port 12 of the first optical circulator 10 is connected to a second optical fiber 16. An opposite end of the second optical fiber 16 is connected to the optical probe 40. A third port 13 of the first optical circulator 10 is directed towards the signal analyzer 60. With the example of Fig. 1 the third port 13 of the first optical circulator 10 is connected to an input port 21 of the optical compensator 20. An output port 23 of the optical compensator 20 is hence connected via a third optical fiber 18 with the input port 61 of the signal analyzer 60. The transmission of light from the third port 13 of the first optical circulator 10 to the input port 21 of the optical compensator 20 is provided by a fourth optical fiber 17.

The entirely fiber-implemented signal transmission from the light source 5 to the optical probe 40 and from the optical probe 40 to the signal analyzer 60 is of particular benefit to provide a rather robust, highly reliable, precise and easily reconfigurable interferometric measuring device 1.

The fiber-based implementation of the interferometric measuring device 1 as illustrated in Fig. 1 can be easily reconfigured into a different configuration as shown in Fig. 2. There, the optical compensator 20 is arranged or integrated in the first fiber-based optical signal path 2. Here, the input port 21 of the optical compensator 20 is connected to the first optical fiber 15. The fourth optical fiber 17 interconnects the output port 23 of the optical compensator 20 with the first port 11 of the first optical circulator 10. The second port 12 of the first optical circulator 10 is connected to the optical probe 40 via the second optical fiber 16. The third port 13 of the first optical circulator 10 is directly connected to the input port 61 of the signal analyzer 60 via the third optical fiber 18.

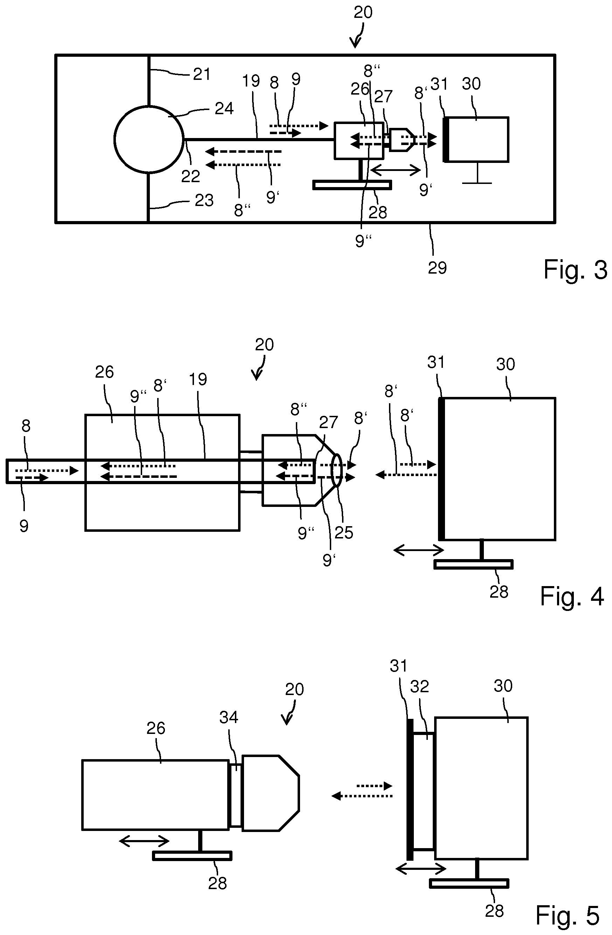

In Figs. 3-5 the internal structure of an example of the optical compensator 20 is shown in greater detail. The optical compensator 20 may comprise a housing 29. The optical compensator 20 further comprises an input port 21 and an output port 23. The optical compensator 20 further comprises a compensator head 26 and a first reflector 31. The first reflector 31 may be arranged on a reference body 30. The reference body 30 may be fixed inside the housing 29 of the optical compensator 20. The compensator head 26 may be moveable along the optical path extending between the compensator head 26 and the first reflector 31. As illustrated in Fig. 3, the compensator head 26 is moveable relative to the first reflector 31 along an elongated track 28. The elongated track 28 may be provided by a translation stage. The translation stage may be servo-driven. In this way, various distances between the compensator head 26 and the first reflector 31 can be realized.

The compensator head 26 is fiber-implemented. It is connected to the input port 21 and to the output port 23 through an internal optical fiber 19. In this way, the compensator head 26 is optically coupled to one of the first fiber-based optical path 2 and the second fiber-based optical path 4 through the internal optical fiber 19. Coupling of the internal optical fiber 19 with at least one or both, the input port 21 and the output port 23 can be provided by a second optical circulator 24. The input port 21 of the optical compensator may coincide with a first port of the second optical circulator 24. The output port 23 of the optical compensator 20 may coincide with a third port of the second optical circulator 24. The internal optical fiber 19 may be connected to a second port 22 of the second optical circulator 24. In this way an optical beam entering the first port 21 is directed to the second port 22 and into the internal optical fiber 19. Light reflected by the first reflector 31 and/or a light propagating from the compensator head 26 towards the second optical circulator 24 through the internal fiber 19 is directed to the output port 23.

The compensator head 26 comprises a second reflector 27. As illustrated in Fig. 4, the second reflector 27 may be provided by an end face of the internal optical fiber 19 terminating in the compensator head 26. The second reflector 27 serves as a beam splitter. In the example as illustrated in Fig. 2 and wherein the measuring beam 7 enters the optical compensator 20 via the first port 21 the measuring beam 7 is split into a first partial beam 8 and a second partial beam 9. The first partial beam 8 is transmitted through the second reflector 27 and is reflected by the first reflector 31. The first partial beam 8 is reflected by the first reflector 31 and re-enters the internal optical fiber 19. The second partial beam 9 may be directly branched off from the measuring beam 7 as the component or portion of the measuring beam 7 that is reflected by the second reflector 27. The second partial beam 9 may be directly reflected by the second reflector 27 and may propagate towards the second optical circulator 24.

In this way, and with the example of Fig. 2 there is imposed an optical path difference D between the first partial beam 8 and the second partial beam 9. The optical path of the first partial beam 8 is longer than the optical path of the second partial beam 9. This optical path difference is compensated by the optical path difference inherent to the optical probe 40 as described above.

In the illustrations of Figs. 3 and 4 a beam configuration of first and second partial beams 8, 9 is illustrated that corresponds to the example of Fig. 1. Here, the first partial beam 8 has been reflected by the internal reflector 42 of the optical probe 40 whereas the second partial beam 9 has been reflected by the surface 51 of the object 50. Hence, the optical path of the first partial beam 8 is shorter compared to the optical path of the second partial beam. As illustrated in greater detail in Fig. 4 the first partial beam 8 precedes the second partial beam 9 as first and second partial beams 8, 9 enter the optical compensator 20. In other words, the second partial beam 9 is delayed compared to the first partial beam 8.

By the second reflector 27 both, the first and the second partial beams 8, 9 are each split into respective first and second sub-beams 8', 8" and 9', 9". The first sub-beam 8', 9' is transmitted through the second reflector 27 and the second partial beam 8", 9" is reflected by the second reflector 27.

When the optical path difference between first and second reflectors 31, 27 substantially matches the optical path difference between the internal reflector 42 and the surface 51 of the object 50 there will be provided at least one pair of sub-beams that is able to interfere when propagating along the second fiber-based optical path 4. In the example as illustrated in Fig. 4 and wherein the first partial beam 8 precedes the second partial beam 9 the first sub-beam 8' of the first partial beam 8 as transmitted by the second reflector 27 and reflected by the first reflector 31 will be able to interfere with the second sub-beam 9" of the second partial beam 9 that is reflected by the second reflector 27.

In this way and by adjusting the optical path difference C between first and second reflectors 27, 31 to the optical path difference D between the internal reflector 42 and the surface 51 of the object 50 at least portions 8', 9" of first and second partial beams 8, 9 propagating along an object or signal path and a reference path of the interferometric setup will be able to interfere and to provide respective phase information being indicative of the microscopic surface deviations or surface profile of the object 50.

Typically, the compensator head 26 is further provided with an optical lens 25 configured to focus the first and second partial beams 8, 9 onto the first reflector 31.

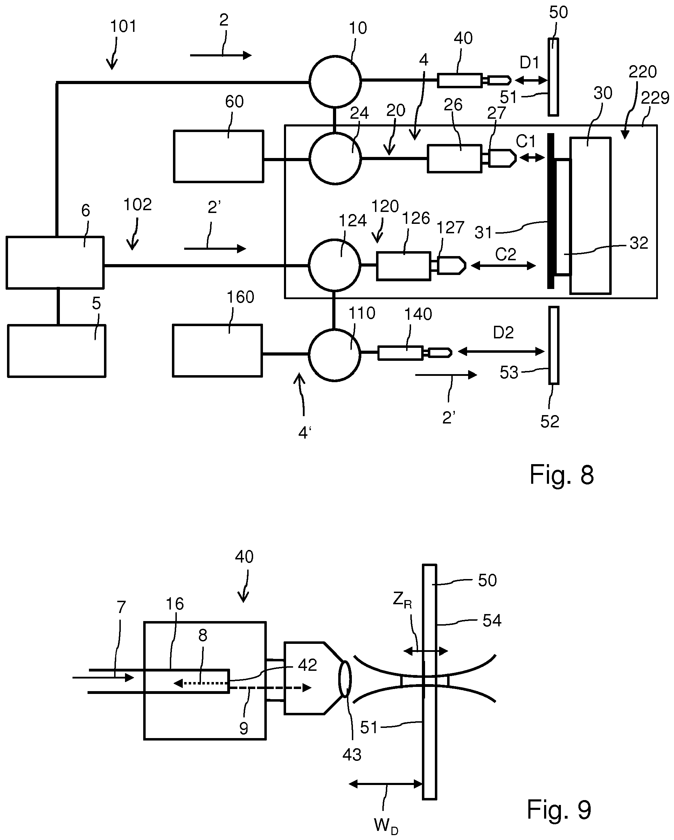

In Fig. 9 the optical probe 40 and the second partial beam 9 emitted by the optical probe 40 are illustrated in greater detail. The optical probe 40 comprises a focusing optical element, such as a lens 43 by way of which the partial beam 9 is focused. The partial beam 9 is typically of a Gaussian profile. The waist of the beam 9 in the region of a focal spot is characterized by a Rayleigh range Z_{R}. Two times the Rayleigh range is illustrated in Fig. 9. A surface 51, 53 of an object 50 located in the Rayleigh range may provide a reflected light beam that re-enters the optical probe 40. Beams reflected by a surface located within the Rayleigh range will substantially re-enter the optical probe 40 and hence the second optical fiber 16. The end face of the optical fiber towards the optical element 43 form or constitute an internal reflector 42.

The measuring beam 7 as provided through the optical fiber 16 is split into the first partial beam 8 and the second partial beam 9 by the internal reflector 42. The first partial beam 8 is reflected by the internal reflector 42 and propagates towards the first optical circulator 10. The second partial beam 9 transmitted through the internal reflector 42 and is reflected on a front surface 51 or back surface 53 of the rather flat or thin transparent object 50. The reflected beam(s) 9 re-enter the optical probe 40. Since the Rayleigh range of the partial beam 9 is larger than the thickness of the object or is larger than the distance between two reflective surfaces 51, 53 it is of particular benefit when the light source 5 comprises a rather short coherence length L. In this way and by adjusting the optical path difference D of the sub-beams 8, 9 or portions thereof with the optical compensator 20 the working distance W_{D} of the optical probe 40 can be appropriately tuned. With a comparatively short coherence length and by appropriately compensating the optical path difference between the internal reflector 42 and one of the reflective surfaces 51, 53 the working distance of the optical probe 40 can be appropriately adjusted such that partial beams 8, 9 reflected from one of the first and second surface 51, 53 will be able to interfere with the second partial beam 9 or a portion thereof as the respective partial beams or sub-beams 8', 9" co-propagate within the fiber towards the signal analyzer 60.

In Fig. 5 the optical compensator 20 according to the claimed invention is schematically illustrated.

Here, the optical compensator 20 comprises at least one piezoelectric transducer 32, 34. By way of the at least one piezoelectric transducer 32, 34 one of the compensator head 26 and the first reflector 31 is moveable relative to the other one of the compensator head 26 and the first reflector 31 along the propagation direction of first and second partial beams 8, 9.

As illustrated in Fig. 5 the first reflector 31 is mounted on a piezoelectric transducer 32. The piezoelectric transducer 32 is fixed to the reference body 30. In this way, the reflector 31 is configured to move periodically along the propagation direction of the first and second partial beams 8, 9. The piezoelectric transducer 32, 34 is typically periodically driven at a driving frequency between 100 Hz and 100 kHz. This driving frequency is electronically detectable and resolvable by the signal analyzer 60 and/or by its processor 68. By means of the periodically driven piezoelectric transducer, a phase shift can be periodically imposed on the interference pattern of the mutually interfering components or portions of first and second partial beams 8, 9. A movement of an interference pattern or a movement of interference fringes in accordance to the movement of the reflector 31 as induced by the piezoelectric transducer 32 can be monitored over time thus allowing to provide a highly precise measuring of the relative phase between the interfering portions of first and second partial beams 8, 9.

The first reflector 31 may be implemented as a reflective mirror.

Generally, the compensator head 26 may be void of a piezoelectric transducer. As illustrated in Fig. 5 the compensator head 26 is also provided with a piezoelectric transducer 34. The piezoelectric transducer 34 is configured to move the second reflector 27 relative to the first reflector 31 along the propagation direction of first and second partial beams 8, 9. When the compensator head 26 is provided with a piezoelectric transducer the reflector 31 and/or the reference body 30 may be void of a piezoelectric transducer 32.

At least one or both of the first reflector 31 and the compensator head 26 is moveable relative to the other one along a track 28. Movement along the track 28 may be provided by applying or varying a DC-voltage to one of the piezoelectric transducers 32, 34. In this way, the optical path difference between first and second reflectors 31, 27 can be adapted and modified in accordance to variations of a working distance of the optical probe 40. Alternative or additionally at least one or both of the compensator head 26 and the first reflector 31 may be mounted on an elongated track 28 extending along the propagation direction of the first and second partial beams 8, 9.

Providing a piezoelectric transducer 32, 34 or providing of a respective phase modulator in the optical compensator 20 is beneficial for reducing the dimensions of the optical probe 40. Arranging of a phase modulator and/or arranging of the piezoelectric transducer 32, 34 offset and remote from the optical probe 40 allows to miniaturize the optical probe 40 and to reduce weight of the optical probe 40. This is beneficial for a dynamic scanning operation of the optical probe, e.g. when the optical probe 40 is moved along a scanning path relative to the object 50. Moreover, the dimensions of the optical probe 40 can be reduced to a minimum thus allowing inspecting and/or to measure surfaces of a comparatively small hollow structure of an object 50.

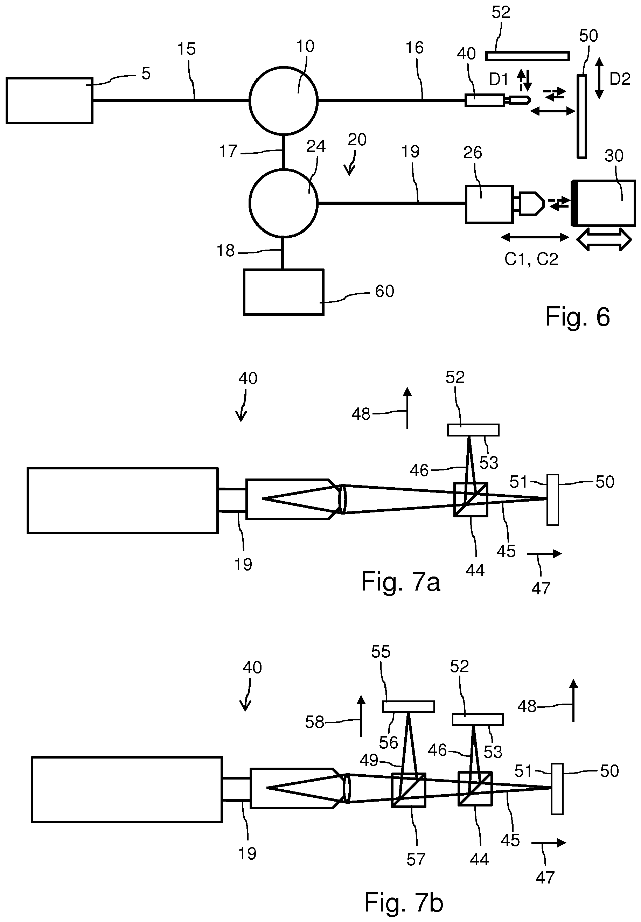

As further indicated in Figs. 6, 7a and 7b the optical probe 40 may be equipped with a beam splitter 44 thus splitting the beams emitted by the optical probe towards the object 50 into a first measuring beam 45 propagating along a first direction 47 and a second measuring beam 46 propagating along a second direction 48. First and second directions may differ or may substantially overlap. The working distance W_{D} or measuring distance along the first measuring beam 45 and the measuring distance along the second measuring beam 46 may differ. Eventually, the first measuring beam 45 and the second measuring beam 46 may traverse different optical elements, such as different lenses featuring different focal length.

Moreover, the working distance between the beam splitter 44 and the first object 50 may differ from the working distance between the beam splitter 44 and the second object 52. The different geometric distances may be within the Rayleigh Z_{R} range of the focused measuring beams 45, 46. An optical path difference D1 between the beam splitter 44 and a surface 51 of the first object 50 may differ by an offset DO from the optical path D2 between the beam splitter 44 and a surface 53 of the second object 52. This offset of the optical path differences D1, D2 may be larger than the coherence length L of the light source 5. Accordingly, in one operation mode the optical compensator 20 can be adjusted and tuned or configured correspondingly so that the interference conditions are fulfilled for beams reflected by the first object whereas the working distance and hence the optical path difference with regard to the second object 52 does not fulfill the interference conditions.

In another operation mode and by appropriately adjusting and reconfiguring the optical compensator 20 this situation may be switched so that partial beams or sub-beams reflected by the second object 52 interfere whereas the beams or sub-beams reflected by the first object 50 do not fulfill the interference conditions. In detail and when adjusting the optical path difference C1 between first and second reflectors 31, 27 to an optical path difference D1 between the internal reflector 42 of the optical probe 40 and a surface 51 of the first object 50 the runtime difference between at least one pair of sub-beams of first and second partial beams is effectively compensated. Alternatively, the optical path compensation can be adjusted to an optical path difference C2 that matches optical path difference D2 between the internal reflector 42 of the optical probe 40 and a surface 53 of the second object 52.

The optical compensator 20 can be sequentially and selectively switched to different optical path offsets C1 or C2 to impose or to compensate different optical path differences D1 or D2. In this way and with one and the same setup a rather precise interferometric measurement of two surfaces of one or of two different objects can be provided.

Even without a beam splitter 44, the working distance of the optical probe 40 can be arbitrarily adjusted so as to inspect only one of a front surface 51 and a back surface 54 of a rather thin object 50 as illustrated in Fig. 10.

While Fig. 7a shows an example of an optical probe 40 configured to generate a first and a second measuring beam 55, 46 the example of Fig. 7b is illustrative of a further optical probe 40 by way of which at least a first, a second and a third measuring beam 45, 46, 49 can be generated. Compared to the example of Fig. 7a the optical probe 40 of Fig. 7b has in addition a further been splitter 57 by way of which a third measuring beam 49 can be branched off towards a further, i.e. a third object 55.

The third measuring beam 49 propagates along a third direction 58. By way of the third measuring beam 49 a third object 55 with a third surface 56 can be measured and/or inspected. The surfaces 51, 53, 56 may also belong to only one or two different objects 50, 52, 55. The first direction 47, the second direction 48 and the first direction 58 may differ from each other.

With some examples the first direction 47 and the second direction 48 extend at a rectangular angle. With some examples the third direction 58 extends at a predefined non-zero angle with regard to one of the first direction 47 and the second direction 48. With some examples the third direction 58 extends at an angle between 45° to 75° with regard to one of the first direction 47 and the second direction 48. The angular orientation of the first direction 47, the second direction 48 and the third direction 58 may depend on the specific geometry of an object that has to be measured with the interferometric measuring device 1.

With the example of Fig. 7a and 7b the measuring distances along the first direction 47, the second direction 48 and the third direction 58 mutually differ. This can be achieved respective beam shaping optical elements, such as lenses in the respective optical paths. Hence, the optical path differences of the first measuring beam 45, the second measuring beam 46 and the third measuring beam 49 mutually differ. The path differences between the measuring beams 45, 46, 49 are typically smaller than or equal to a maximum of an optical path difference that can be imposed or compensated by the optical compensator 20.

In this way and by appropriately configuring or adapting the tunable optical compensator 20 in accordance to the optical path difference between the optical probe 40 and the respective object 50, 52, 55 along the respective measuring beam 45, 46, 49 only one of the measuring beams 45, 46, 49 and hence only one of the respective surfaces 51, 53, 56 can be selected for interferometric measurement at a time.

In Fig. 8 a further example of the measuring device 1 is illustrated. Here, the light source 5 is coupled with a beam splitter 6. While the output of the beam splitter 6 is connected to a first fiber-based optical signal path 2 the other output of the beam splitter 6 is coupled to a third fiber-based optical signal path 2'. There is also provided a fourth fiber-based optical signal path 4'. Along the first fiber-based optical signal path 2 there is provided a first circulator 10, an optical probe 40. There is provided a second fiber-based optical signal path 4 extending from the optical probe 40 towards a signal analyzer 60. Along first and second fiber-based optical signal paths 2, 4 there are further provided first and second optical circulators 10, 24. The setup and arrangement of the optical compensator 20, the optical probe 40, the signal analyzer 60 and the first and second optical circulators 10, 24 is substantially identical or equivalent to the setup as illustrated in Figs. 1 and 6.

Along the third and fourth fiber-based optical signal paths 2', 4' a substantially identical setup of a measuring device is provided. Here, a second optical probe 140 equipped with an internal reflector 42 is coupled to the light source 5 via a further optical circulator 110. The second optical compensator 120 is arranged in the third fiber-based optical signal path 2'.

The fourth fiber-based optical signal path 4' extends from the second optical probe 140 towards the second signal analyzer 160. As illustrated in Fig. 8 the first optical probe 40 and the first optical compensator 20 are arranged in a configuration corresponding to Fig. 1. The second optical probe 140 and the second optical compensator 120 are arranged in a configuration according to Fig. 2. Such a configuration is particularly useful for combining the first and the second optical compensators 20, 120 in a common optical compensator 220. The common optical compensator 220 may comprise a housing 229 in which the optical circulators 24, 124 and respective compensator heads 26, 126 are arranged.

The combined optical compensator 220 comprises only one first reflector 131 serving as a common reflector for both, the compensator head 26 and the compensator head 126. The optical path difference C1 between the second reflector 27 and the reflector 131 is individually adjustable or modifiable compared to the optical path difference C2 between the reflector 127 of the compensator head 126 and the reflector 131. In this way the compensator head 26 is adapted to compensate a first optical path difference D1 between the first optical probe 40 and the first object 50 whereas the second compensator head 126 is configured to compensate a second optical path difference D2 between the second optical probe 140 and a second object 52.

The first and second optical probes 40, 140 as well as first and second optical compensators 20, 120 are individually coupled to first and second signal analyzers 60, 160 thus allowing and supporting simultaneous measurement of distances to two different objects 50, 52 or to simultaneously measure different surfaces 51, 53, e.g. front and back surface 51, 54 of one and the same object 50, 52.

The second optical probe 140 and the second optical compensator 120 are arranged in a configuration according to Fig. 2. In other embodiments or examples the mutual arrangement of the first optical probe 40 and the first optical compensator 20 is identical or equivalent to the arrangement of the second optical probe 140 and the second optical compensator 120. Insofar, a first measuring branch 101 and a second measuring branch 102 connected to the beam splitter 6 and each providing an interferometric measuring device as described above may be implemented substantially identically.

Sharing one and the same first reflector 131 by at least a first compensator head 26 and a second compensator head 126 is beneficial to reduce the total number of components of the interferometric measuring device 1. Moreover, the piezoelectric transducer 32 may be exclusively provided for the common or shared reflector 131. In this way and for first and second optical compensators 20, 120 there is only required one piezoelectric transducer 32. In this way the number of components and costs for implementing the interferometric measuring device can be decreased.

### Reference Numbers

- 1: measuring device
- 2, 2': fiber-based optical path
- 4, 4': fiber-based optical path
- 5: light source
- 6: beam splitter
- 7: measuring beam
- 8: partial beam
- 9: partial beam
- 10: circulator
- 11: port
- 12: port
- 13: port
- 15: fibre
- 16: fibre
- 17: fibre
- 18: fibre
- 19: fibre
- 20: optical compensator
- 21: port
- 22: port
- 23: port
- 24: circulator
- 25: lens
- 26: head
- 27: reflector
- 28: track
- 29: housing
- 30: reference body
- 31: reflector
- 32: transducer
- 34: transducer
- 40: measurement probe
- 42: reflector
- 43: lens
- 44: beam splitter
- 45: measuring beam
- 46: measuring beam
- 47: direction
- 48: direction
- 49: measuring beam50 object
- 51: surface
- 52: object
- 53: surface
- 54: surface
- 55: object
- 56: surface
- 57: beam splitter
- 58: direction
- 60: signal analyser
- 61: port
- 62: demultiplexer
- 63: filter
- 64: detector
- 65: detector
- 66: detector
- 67: filter
- 68: processor
- 69: filter
- 101: measuring branch
- 102: measuring branch
- 110: circulator
- 120: optical compensator
- 124: circulator
- 127: reflector
- 131: reflector
- 140: probe
- 160: signal analyser
- 220: optical compensator
- 229: housing

## Claims

1. An interferometric measuring device (1) for measuring a surface (51, 53, 54) or profile of an object (50) by measuring a distance between an optical probe (40) and the surface (51) by interferometry, the measuring device comprising:
- a light source (5) configured to emit a measuring beam (7) comprising a coherence length L,
- the optical probe (40) comprising an internal reflector (42) and coupled to the light source (5) by a first fiber-based optical signal path (2),
- a signal analyzer (60) coupled to the optical probe (40) by a second fiber-based optical signal path (4),
- an optical compensator (20) arranged in one of the first fiber-based optical signal path (2) and the second fiber-based optical signal path (4),
- wherein one of the optical probe (40) and the optical compensator (20) is configured to split the measuring beam (7) into a first partial beam (8) and a second partial beam (9) and to impose an optical path difference D onto a portion of one of the first and second partial beams (8, 9) relative to a portion of the other one of the first and second partial beams (8, 9), wherein the optical path difference D is larger than the coherence length L, and
- wherein the other one of the optical probe (40) and the optical compensator (20) is configured to compensate the optical path difference D,
- wherein the optical compensator (20) comprises a compensator head (26) and a first reflector (31), wherein the compensator head (26) is configured to direct one of the measuring beam (7), the first partial beam (8), the second partial beam (9) or a portion thereof towards the first reflector (31), **characterized in that**
- the compensator head (26) comprises a second reflector (27) configured:
- to split the measuring beam (7) into the first partial beam (8) and the second partial beam (9), or
- to split the first partial beam (8) into first and second sub-beams (8', 8") of the first partial beam (8) and to split the second partial beam (9) into first and second sub-beams (9', 9") of the second partial beam (9),
- wherein an optical path difference between the first reflector (31) and the second reflector (27) is modifiable and/or adjustable,
- the optical compensator (20) comprises at least one piezoelectric transducer (32, 34) and wherein one of the compensator head (26) and the first reflector (31) is periodically movable relative to the other one of the compensator head (26) and the first reflector (31) along a propagation direction of the first and second partial beams (8, 9) by the piezoelectric transducer (32, 34) at a frequency between 100 Hz and 100 kHz for improving a determination of a relative phase between interfering sub-beams of first and second partial beams (8, 9) on the signal analyzer (60).

2. The measuring device (1) of claim 1, wherein the first fiber-based optical signal path (2) comprises a first optical fiber (15) and a second optical fiber (16), wherein the first optical fiber (15) connects the light source (5) to a first optical circulator (10) and wherein the second optical fiber (16) connects the first optical circulator (10) to the optical probe (40).

3. The measuring device (1) of claim 2, wherein the second fiber-based optical signal path (4) comprises the second optical fiber (16) and a third optical fiber (18), wherein the third optical fiber (18) connects the signal analyzer (60) to the first optical circulator (10).

4. The measuring device of any one of the preceding claims, wherein the compensator head (26) and the first reflector (31) are encapsulated in a housing (29).

5. The measuring device (1) according to any one of the preceding claims, wherein the compensator head (26) is optically coupled to one of the first fiber-based optical path (2) and the second fiber-based optical path (4) through an internal optical fiber (19).

6. The measurement device (1) according to claim 5, wherein the compensator head (26) is optically coupled to at least one or both of an input port (21) and an output port (23) of the optical compensator (20) by the internal optical fiber (19).

7. The measuring device (1) according to any one of the preceding claims, wherein one of the compensator head (26) and the first reflector (31) is movable relative to the other one of the compensator head (26) and the first reflector (31) along a track (28).

8. The measuring device (1) according to any one of the preceding claims, wherein the compensator head (26) is configured to capture light reflected by the first reflector (31).

9. The measuring device (1) according to any one of the preceding claims 5 - 8. wherein the second reflector (27) coincides with or is formed by an end face of the internal optical fiber (19).

10. The measuring device (1) according to any one of the preceding claims, wherein the optical compensator (20) comprises a second optical circulator (24), the second optical circulator (24) comprises a first port (21), a second port (22) and a third port (23), wherein the second port (22) is optically coupled to the compensator head (26).

11. The measuring device (1) according to claim 10,
- wherein the first port (21) is connected to the light source (5) and the third port (23) is connected to the first optical circulator (10) or
- wherein the first port (21) is connected to the first optical circulator (10) and the third port (23) is connected to the signal analyzer (60).

12. The measuring device (1) according to any one of the preceding claims, wherein the optical probe (40) comprises a beam splitter (44) configured to emit a first measuring beam (45) in a first direction (47) or to a first object (50) and to emit a second measuring beam (46) in a second direction (48) and/or to a second object (52).

13. The measuring device (1) according to any one of the preceding claims further comprising:
- a second optical probe (140) comprising an internal reflector (42) and coupled to the light source (5) by a third fiber-based optical signal path (2'),
- a second signal analyzer (160) coupled to the second optical probe (140) by a fourth fiber-based optical signal path (4'),
- a second optical compensator (120) arranged in one of the third fiber-based optical signal path (2') and the fourth fiber-based optical signal path (4'), and
- at least one reflector (131) shared by the first optical compensator (20) and the second optical compensator (120).

## Patentansprüche

1. Interferometrische Messvorrichtung (1) zum Messen einer Oberfläche (51, 53, 54) oder eines Profils eines Objekts (50) durch Messen einer Distanz zwischen einer optischen Sonde (40) und der Oberfläche (51) durch Interferometrie, wobei die Messvorrichtung Folgendes aufweist:
- eine Lichtquelle (5) ausgestaltet zum Emittieren eines Messstrahls (7), der eine Kohärenzlänge L aufweist,
- wobei die optische Sonde (40) einen internen Reflektor (42) aufweist und mit der Lichtquelle (5) über einen ersten faserbasierten optischen Signalweg (2) gekoppelt ist,
- einen Signalanalysator (60), gekoppelt mit der optischen Sonde (40) über einen zweiten faserbasierten optischen Signalweg (4),
- einen optischen Kompensator (20), angeordnet in dem ersten faserbasierten optischen Signalweg (2) oder in dem zweiten faserbasierten optischen Signalweg (4),
- wobei einer von der optischen Sonde (40) und dem optischen Kompensator (20) zum Aufteilen des Messstrahls (7) in einen ersten Teilstrahl (8) und einen zweiten Teilstrahl (9) und zum Auferlegen einer optischen Wegdifferenz D auf einen Abschnitt des ersten oder des zweiten Teilstrahls (8, 9) relativ zu einem Abschnitt des anderen des ersten oder des zweiten Teilstrahls (8, 9) ausgestaltet ist, wobei die optische Wegdifferenz D größer als die Kohärenzlänge L ist und,
- wobei die bzw. der andere von der optischen Sonde (40) und dem optischen Kompensator (20) zum Kompensieren der optischen Wegdifferenz D ausgestaltet ist,
- wobei der optische Kompensator (20) einen Kompensatorkopf (26) und einen ersten Reflektor (31) aufweist, wobei der Kompensatorkopf (26) zum Richten des Messstrahls (7) oder des ersten Teilstrahls (8) oder des zweiten Teilstrahls (9) oder eines Abschnitts davon auf den ersten Reflektor (31) ausgestaltet ist, **dadurch gekennzeichnet, dass**
- der Kompensatorkopf (26) einen zweiten Reflektor (27) aufweist, der ausgestaltet ist zum:
- Aufteilen des Messstrahls (7) in den ersten Teilstrahl (8) und den zweiten Teilstrahl (9) oder
- Aufteilen des ersten Teilstrahls (8) in einen ersten und einen zweiten Unterstrahl (8', 8'') des ersten Teilstrahls (8) und zum Aufteilen des zweiten Teilstrahls (9) in einen ersten und einen zweiten Unterstrahl (9', 9") des zweiten Teilstrahls (9),
- wobei eine optische Wegdifferenz zwischen dem ersten Reflektor (31) und dem zweiten Reflektor (27) modifizierbar und/oder einstellbar ist,
- wobei der optische Kompensator (20) zumindest einen piezoelektrischen Wandler (32, 34) aufweist und wobei einer vom dem Kompensatorkopf (26) und dem ersten Reflektor (31) relativ zu dem anderen des Kompensatorkopfes (26) und des ersten Reflektors (31) entlang einer Ausbreitungsrichtung des ersten und des zweiten Teilstrahls (8, 9) zwecks Verbessern einer Bestimmung einer relativen Phase zwischen interferierenden Unterstrahlen des ersten und des zweiten Teilstrahls (8, 9) auf dem Signalanalysator (60) durch den piezoelektrischen Wandler (32, 34) mit einer Frequenz zwischen 100 Hz und 100 kHz periodisch bewegbar ist..

2. Messvorrichtung (1) nach Anspruch 1, wobei der erste faserbasierte optische Signalweg (2) eine erste Lichtleiterfaser (15) und eine zweite Lichtleiterfaser (16) aufweist, wobei die erste Lichtleiterfaser (15) die Lichtquelle (5) mit einem optischen Zirkulator (10) verbindet und wobei die zweite Lichtleiterfaser (16) den ersten optischen Zirkulator (10) mit der optischen Sonde (40) verbindet.

3. Messvorrichtung (1) nach Anspruch 2, wobei der zweite faserbasierte optische Signalweg (4) die zweite Lichtleiterfaser (16) und eine dritte Lichtleiterfaser (18) aufweist, wobei die dritte Lichtleiterfaser (18) den Signalanalysator (60) mit dem ersten optischen Zirkulator (10) verbindet.

4. Messvorrichtung nach einem der vorhergehenden Ansprüche, wobei der Kompensatorkopf (26) und der erste Reflektor (31) in einem Gehäuse (29) eingekapselt sind.

5. Messvorrichtung (1) nach einem der vorhergehenden Ansprüche, wobei der Kompensatorkopf (26) über eine interne Lichtleiterfaser (19) optisch mit dem ersten faserbasierten optischen Weg (2) oder dem zweiten faserbasierten optischen Weg (4) gekoppelt ist.

6. Messvorrichtung (1) nach Anspruch 5, wobei der Kompensatorkopf (26) durch die interne Lichtleiterfaser (19) mit einem Eingangsport (21) und/oder einem Ausgangsport (23) des optischen Kompensators (20) gekoppelt ist.

7. Messvorrichtung (1) nach einem der vorhergehenden Ansprüche, wobei der Kompensatorkopf (26) oder der erste Reflektor (31) relativ zu dem anderen des Kompensatorkopfes (26) oder des ersten Reflektors (31) entlang einer Führung (28) bewegbar ist.

8. Messvorrichtung (1) nach einem der vorhergehenden Ansprüche, wobei der Kompensatorkopf (26) ausgestaltet ist zum Einfangen von Licht, das durch den ersten Reflektor (31) reflektiert wurde.

9. Messvorrichtung (1) nach einem der vorhergehenden Ansprüche 5-8, wobei der zweite Reflektor (27) mit einer Endfläche der internen Lichtleiterfaser (19) zusammenfällt oder von einer solchen gebildet wird.

10. Messvorrichtung (1) nach einem der vorhergehenden Ansprüche, wobei der optische Kompensator (20) einen zweiten optischen Zirkulator (24) aufweist, wobei der zweite optische Zirkulator (24) einen ersten Port (21), einen zweiten Port (22) und einen dritten Port (23) aufweist, wobei der zweite Port (22) optisch mit dem Kompensatorkopf (26) gekoppelt ist.

11. Messvorrichtung (1) nach Anspruch 10,
- wobei der erste Port (21) mit der Lichtquelle (5) verbunden ist und der dritte Port (23) mit dem ersten optischen Zirkulator (10) verbunden ist oder
- wobei der erste Port (21) mit dem ersten optischen Zirkulator (10) verbunden ist und der dritte Port (23) mit dem Signalanalysator (60) verbunden ist.

12. Messvorrichtung (1) nach einem der vorhergehenden Ansprüche, wobei die optische Sonde (40) einen Strahlteiler (44) aufweist, der ausgestaltet ist zum Emittieren eines ersten Messstrahls (45) in einer ersten Richtung (47) oder zu einem ersten Objekt (50) und zum Emittieren eines zweiten Messstrahls (46) in einer zweiten Richtung (48) und/oder zu einem zweiten Objekt (52) .

13. Messvorrichtung (1) nach einem der vorhergehenden Ansprüche, ferner aufweisend:
- eine zweite optische Sonde (140), die einen internen Reflektor (42) aufweist, der mit der Lichtquelle (5) über einen dritten faserbasierten optischen Signalweg (2') gekoppelt ist,
- einen zweiten Signalanalysator (160), gekoppelt mit der zweiten optischen Sonde (140) über einen vierten faserbasierten optischen Signalweg (4'),
- einen zweiten optischen Kompensator (120), angeordnet in dem dritten faserbasierten optischen Signalweg (2') oder dem vierten faserbasierten optischen Signalweg (4'), und
- zumindest einen Reflektor (131), der von dem ersten optischen Kompensator (20) und dem zweiten optischen Kompensator (120) gemeinsam genutzt wird.

## Revendications

1. Dispositif de mesure interférométrique (1) pour mesurer une surface (51, 53, 54) ou un profil d'un objet (50) en mesurant une distance entre une sonde optique (40) et la surface (51) par interférométrie, le dispositif de mesure comprenant :
- une source lumineuse (5) configurée pour émettre un faisceau de mesure (7) comprenant une longueur de cohérence L,
- la sonde optique (40) comprenant un réflecteur interne (42) et étant couplée à la source lumineuse (5) par un premier chemin de signal optique à fibres (2),
- un analyseur de signaux (60) couplé à la sonde optique (40) par un second chemin de signal optique à fibres (4),
- un compensateur optique (20) agencé dans le premier chemin de signal optique à fibres (2) et/ou le second chemin de signal optique à fibres (4),
- dans lequel un parmi la sonde optique (40) et le compensateur optique (20) est configuré pour diviser le faisceau de mesure (7) en un premier faisceau partiel (8) et un second faisceau partiel (9) et pour imposer une différence de chemin optique D sur une partie de l'un des premiers et seconds faisceaux partiels (8, 9) par rapport à une partie de l'autre des premiers et seconds faisceaux partiels (8, 9), dans lequel la différence de chemin optique D est plus grande que la longueur de cohérence L, et
- dans lequel l'autre parmi la sonde optique (40) et le compensateur optique (20) est configuré pour compenser la différence de chemin optique D,
- dans lequel le compensateur optique (20) comprend une tête de compensateur (26) et un premier réflecteur (31), dans lequel la tête de compensateur (26) est configurée pour diriger un parmi le faisceau de mesure (7), le premier faisceau partiel (8), le second faisceau partiel (9) ou une partie de ceux-ci vers le premier réflecteur (31), **caractérisé en ce que**
- la tête de compensateur (26) comprend un second réflecteur (27) configuré :
- pour diviser le faisceau de mesure (7) en premier faisceau partiel (8) et second faisceau partiel (9), ou
- pour diviser le premier faisceau partiel (8) en des premier et second sous-faisceaux (8', 8") du premier faisceau partiel (8) et pour diviser le second faisceau partiel (9) en des premier et second sous-faisceaux (9', 9") du second faisceau partiel (9),
- dans lequel une différence de chemin optique entre le premier réflecteur (31) et le second réflecteur (27) est modifiable et/ou ajustable,
- le compensateur optique (20) comprend au moins un transducteur piézoélectrique (32, 34) et dans lequel un parmi la tête de compensateur (26) et le premier réflecteur (31) est périodiquement mobile par rapport à l'autre parmi la tête de compensateur (26) et le premier réflecteur (31) le long d'une direction de propagation des premier et second faisceaux partiels (8, 9) par le transducteur piézoélectrique (32, 34) à une fréquence comprise entre 100 Hz et 100 kHz pour améliorer une détermination d'une phase relative entre des sous-faisceaux interférents des premier et second faisceaux partiels (8, 9) sur l'analyseur de signaux (60).

2. Dispositif de mesure (1) selon la revendication 1, dans lequel le premier chemin de signal optique à fibres (2) comprend une première fibre optique (15) et une deuxième fibre optique (16), dans lequel la première fibre optique (15) connecte la source lumineuse (5) à un premier circulateur optique (10) et dans lequel la deuxième fibre optique (16) connecte le premier circulateur optique (10) à la sonde optique (40).

3. Dispositif de mesure (1) selon la revendication 2, dans lequel le second chemin de signal optique à fibres (4) comprend la deuxième fibre optique (16) et une troisième fibre optique (18), dans lequel la troisième fibre optique (18) connecte l'analyseur de signaux (60) au premier circulateur optique (10).

4. Dispositif de mesure selon l'une quelconque des revendications précédentes, dans lequel la tête de compensateur (26) et le premier réflecteur (31) sont encapsulés dans un boîtier (29).

5. Dispositif de mesure (1) selon l'une quelconque des revendications précédentes, dans lequel la tête de compensateur (26) est couplée optiquement à un parmi le premier chemin optique à fibres (2) et le second chemin optique à fibres (4) par l'intermédiaire d'une fibre optique interne (19).

6. Dispositif de mesure (1) selon la revendication 5, dans lequel la tête de compensateur (26) est optiquement couplée à au moins un ou les deux parmi un port d'entrée (21) et un port de sortie (23) du compensateur optique (20) par la fibre optique interne (19).

7. Dispositif de mesure (1) selon l'une quelconque des revendications précédentes, dans lequel un parmi la tête de compensateur (26) et le premier réflecteur (31) est mobile par rapport à l'autre parmi la tête de compensateur (26) et le premier réflecteur (31) le long d'une piste (28).

8. Dispositif de mesure (1) selon l'une quelconque des revendications précédentes, dans lequel la tête de compensateur (26) est configurée pour capter la lumière réfléchie par le premier réflecteur (31).

9. Dispositif de mesure (1) selon l'une quelconque des revendications 5 à 8 précédentes, dans lequel le second réflecteur (27) coïncide avec une face d'extrémité de la fibre optique interne (19) ou est formé par celle-ci.

10. Dispositif de mesure (1) selon l'une quelconque des revendications précédentes, dans lequel le compensateur optique (20) comprend un second circulateur optique (24), le second circulateur optique (24) comprend un premier port (21), un deuxième port (22) et un troisième port (23), le deuxième port (22) étant couplé optiquement à la tête de compensateur (26).

11. Dispositif de mesure (1) selon la revendication 10,
- dans lequel le premier port (21) est connecté à la source lumineuse (5) et le troisième port (23) est connecté au premier circulateur optique (10) ou
- dans lequel le premier port (21) est connecté au premier circulateur optique (10) et le troisième port (23) est connecté à l'analyseur de signaux (60).

12. Dispositif de mesure (1) selon l'une quelconque des revendications précédentes, dans lequel la sonde optique (40) comprend un diviseur de faisceau (44) configuré pour émettre un premier faisceau de mesure (45) dans une première direction (47) ou vers un premier objet (50) et pour émettre un second faisceau de mesure (46) dans une seconde direction (48) et/ou vers un second objet (52).

13. Dispositif de mesure (1) selon l'une quelconque des revendications précédentes comprenant en outre :
- une seconde sonde optique (140) comprenant un réflecteur interne (42) et couplée à la source lumineuse (5) par un troisième chemin de signal optique à fibres (2'),
- un second analyseur de signaux (160) couplé à la seconde sonde optique (140) par un quatrième chemin de signal optique à fibres (4'),
- un second compensateur optique (120) agencé dans un parmi le troisième chemin de signal optique à fibres (2') et le quatrième chemin de signal optique à fibres (4'), et
- au moins un réflecteur (131) partagé par le premier compensateur optique (20) et le second compensateur optique (120).
